## Europäisches Patentamt

## European Patent Office

## Office européen des brevets

(19)

(11) Veröffentlichungsnummer: **0 255 703 B1**

(12) # EUROPÄISCHE PATENTSCHRIFT

(45) Veröffentlichungstag der Patentschrift: **03.06.92**

(51) Int. Cl.⁵: **A61G 5/00**, B62K 7/00

(21) Anmeldenummer: **87111069.8**

(22) Anmeldetag: **30.07.87**

(54) **Behindertenfahrzeug.**

(30) Priorität: **31.07.86 DE 3625955**
**09.09.86 DE 3630687**

(43) Veröffentlichungstag der Anmeldung:
**10.02.88 Patentblatt 88/06**

(45) Bekanntmachung des Hinweises auf die
Patenterteilung:
**03.06.92 Patentblatt 92/23**

(84) Benannte Vertragsstaaten:
**AT BE CH DE ES FR GB IT LI NL SE**

(56) Entgegenhaltungen:
**BE-A- 566 833**
**DE-A- 3 303 218**
**DE-U- 8 522 016**
**US-A- 2 482 585**

(73) Patentinhaber: **Schramm, Siegfried**
**Schenkendorfstrasse 1**
**W-3208 Giesen(DE)**

(72) Erfinder: **Schramm, Siegfried**
**Schenkendorfstrasse 1**
**W-3208 Giesen(DE)**

(74) Vertreter: **Leissler-Gerstl, Gabriele**
**Patentanwälte Spott Weinmiller & Partner**
**Sendlinger-Tor-Platz 11**
**W-8000 München 2(DE)**

## Beschreibung

Die Erfindung betrifft ein Behindertenfahrzeug umfassend einen Rollstuhl mit Sitz und Lehne, an dessen Rahmen zwei gleichachsige Hinterräder und wenigstens ein Vorderrad gelagert sind, einen hinter dem Rollstuhl angeordneten Fahrradrahmen mit einem über Pedale antreibbaren Antriebsrad, einem Sattel und einer an einem Lenkerlager des Fahrradrahmens um eine im wesentlichen vertikale Schwenkachse schwenkbar gelagerte Kupplungsvorrichtung für die lösbare Verbindung des Rollstuhls mit dem Fahrradrahmen, wobei die Kupplungsvorrichtung wenigstens einen zur Längsachse des Fahrradrahmens quer verlaufenden Querträger hat, der in der Querrichtung im Abstand voneinander über zwei Kupplungselemente an dem Rollstuhlrahmen befestigbar ist und das Vorderende des Fahrradrahmens an dem Rahmen des Rollstuhls abstützt.

Nicht nur alte, gebrechliche Menschen sind auf den Rollstuhl angewiesen, sondern auch viele junge Menschen sind aufgrund einer Behinderung oder eines Unfalls an den Rollstuhl gefesselt. Häufig ist es notwendig oder auch wünschenswert, daß der Rollstuhlfahrer von einer Hilfsperson begleitet wrid. Die Fortbewegung der Hilfsperson zusammen mit einem Rollstuhlfahrer ist in der Regel nur möglich, wenn man den Rollstuhl schiebt oder neben dem Rollstuhl herläuft.

Um nun zu ermöglichen, daß Angehörige oder Freunde eines Rollstuhlfahrers sich zusammen mit ihm fortbewegen und Ausflüge unternehmen können, wurde bereits vorgeschlagen, ein Fahrrad mit einem Rollstuhl zu verbinden. Dazu wurden ein eigens dafür angefertigter Rollstuhl und ein Fahrrad so verbunden, daß sie ein Gefährt bilden, daß vorne auf drei Rädern läuft. Der Rollstuhl wird dazu leicht nach hinten gekippt. Dieses Gefährt ist sehr kostspielig und erfordert, daß sich der Rollstuhlfahrer einen zweiten Rollstuhl anschaffen muß.

Nachteil dieser bekannten Vorrichtung ist es, daß ein speziell angefertigter Rollstuhl verwendet werden muß, und daß nicht der von dem Rollstuhlfahrer ständig benutzte Rollstuhl mit einem Fahrrad verbunden werden kann.

Weiterhin ist aus DE-OS 33 03 218 ein Dreirad zur Beförderung von Personen bekannt, das aus einem Rollstuhl besteht, an den ein Fahrradhinterteil über ein Drehgelenk und ein Verbindungselement gekoppelt ist. Die Kopplung erfolgt dabei so, daß der Rollstuhl nach hinten gekippt wird. Dadurch wird aber das Besteigen dieses Gefährts schwierig. Wenn der Rollstuhlfahrer zuerst den Rollstuhl besteigt, wird das Fahrradhinterteil nach oben gedrückt und über das Drehgelenk nach vorne geschwenkt. Andererseits kann der Rollstuhlfahrer den Rollstuhl nicht besteigen, wenn der Radfahrer schon auf dem Fahrrad sitzt und der Rollstuhl daher nach hinten geneigt ist.

Aus US-PS 2,482,585 ist ein Gefährt bekannt, das aus dem hinteren Teil eines Fahrrades und einem Kinderwagen besteht. Die beiden Teile des Gefährtes sind über ein schwenkbares Gelenk (38,39,34) verbunden, das dazu vorgesehen ist, den Kinderwagen so zu schwenken, daß seine Vorderräder während des Fahrens von der Fahrbahn abheben.

Es war nun Aufgabe der Erfindung, ein Gefährt zu schaffen, mit dem sich ein Rollstuhlfahrer und ein Begleiter gemeinsam fortbewegen können, bei dem ein handelsüblicher Rollstuhl verwendet werden kann und das leicht zusammengesetzt werden kann. Weiterhin war es Aufgabe der Erfindung ein Fahrzeug zu schaffen, das leicht zu bedienen ist und das mit und ohne Belastung stabilisiert ist.

Diese Aufgabe wird gelöst durch ein Behindertenfahrzeug umfassend einen Rollstuhl mit Sitz und Lehne, an dessen Rahmen zwei gleichachsige Hinterräder und wenigstens ein Vorderrad gelagert sind, einen hinter dem Rollstuhl angeordneten Fahrradrahmen mit einem über Pedal antreibbaren Antriebsrad, einem Sattel und einer an einem Lenkerlager des Fahrradrahmens um eine im wesentlichen vertikale Schwenkachse schwenkbar gelagerten Kupplungsvorrichtung für die lösbare Verbindung des Rollstuhls mit dem Fahrradrahmen, wobei die Kupplungsvorrichtung wenigstens einen zur Längsachse des Fahrradrahmens quer verlaufenden Querträger hat, der in der Querrichtung im Abstand voneinander über zwei Kupplungselemente an dem Rollstuhlrahmen befestigbar ist und das Vorderende des Fahrradrahmens an dem Rahmen des Rollstuhls abstützt das dadurch gekennzeichnet ist, daß das die Kupplungsvorrichtung tragende Lenkerlager mit dem Fahrradrahmen über ein beidseitig drehbares Gelenk mit im wesentlichen horizontaler Schwenkachse ansonsten jedoch im wesentlichen drehsteif verbunden ist, wobei das Gelenk (42) die Schwenkung des Armes (3) bezüglich des Lenkerlagers (35) in beiden Richtungen ermöglicht.

Die Montage des erfindungsgemäßen Behindertenfahrzeugs ist einfach und praktisch mit jedem Rollstuhl durchzuführen.

Als Rollstuhl kann jeder handelsübliche Rollstuhl, der zwei gleichachsige Hinterräder und mindestens ein Vorderrad hat, verwendet werden. Er hat einen Rahmen, der Sitz und Lehne hält und der vertikale Streben hat. Um den Transport zu erleichtern wird bevorzugt ein in Achsrichtung der Hinterräder zusammenklappbarer Rollstuhl verwendet.

An diesem Rollstuhl wird ein Fahrradrahmen befestigt. Dieser Fahrradrahmen umfaßt eine Hinterradgabel, die eine Nabe und ein über Pedale antreibbares Antriebsrad trägt, ein Sattelstützrohr, das den Sattel trägt und ein Pedallager mit Pedalen. Bevorzugt wird das Antriebsrad über einen Kettenantrieb angetrieben. Das Lenkerlager, an dem sich die Kupplungsvorrichtung befindet, ist mit dem Fahrradrahmen über ein Gelenk mit im wesentlichen horizontaler Schwenkachse, ansonsten jedoch im wesentlichen drehsteif, verbunden.

Die aus dem Gelenk und dem mit ihm verbundenen, die Kupplungsvorrichtung tragenden Lenkerlager bestehende Anordnung wird im folgenden als Kreuzgelenk bezeichnet. Das Kreuzgelenk kann sich direkt am Fahrradrahmen befinden oder mit dem Fahrradrahmen durch ein oder mehrere Verbindungsrohre verbunden sein. Bevorzugt ist das Kreuzgelenk mit dem Fahrradrahmen durch einen Arm verbunden. Der Arm trägt dann an seinem einen Ende das Gelenk mit im wesentlichen horizontaler Schwenkachse, das wiederum mit dem Lenkerlager, das eine im wesentlichen vertikale Schwenkachse aufweist, verbunden ist und ist mit dem anderen Ende an dem Hinterradrahmen im Bereich des Pedallagers befestigbar.

In einer besonders bevorzugten Ausführungsform ist das Kreuzgelenk so angeordnet, daß es sich in Fahrtrichtung vor der Achse der Hinterräder des Rollstuhls befindet. Bei dieser Anordnung ist die Lage des erfindungsgemäßen Behindertenfahrzeugs auch ohne Belastung besonders stabil.

Bevorzugt trägt der Arm, der den Fahrradrahmen mit dem Lenkerlager verbindet, an dem dem Lenkerlager zugewandten Ende eine Haltevorrichtung. Diese Haltevorrichtung ist an dem Arm befestigt und besteht bevorzugt aus einem quer zu der Längsrichtung des Arms verlaufenden Querholm, von dem sich zwei in Längsrichtung des Armes verlaufende Holme erstrecken. An dieser Haltevorrichung ist quer zur Längsrichtung des Arms das Gelenk befestigbar. Bevorzugt ist das Gelenk ein beidseitig drehbar gelagertes Zwischenstück, das mit dem Lenkerlager fest verbunden ist.

In einer bevorzugten Ausführungsform befinden sich dazu an beiden Seiten des Zwischenstückes Kugellager. Zur Stabilisierung der Fahrlage bei unbelastetem Rollstuhl ist weiterhin bevorzugt an der Haltevorrichtung ein Anschlag angeordnet, der die Kipplage des Gelenks nach unten begrenzt.

Bevorzugt trägt der Arm an dem dem Lenkerlager abgewandten Ende eine Rahmenkupplung, die mit dem Hinterradrahmen starr kuppelbar ist. Besonders bevorzugt ist die Rahmenkupplung ein Klappscharnier.

In einer besonders bevorzugten Ausführungsform wird als Fahrradrahmen der Hinterradrahmen eines Einrohr-Klapprades verwendet. In diesem Fall ist der Hinterradrahmen mit dem Lenkerlager, das eine im wesentlichen vertikale Schwenkachse aufweist, über einen Arm verbunden. Der Arm trägt dann an seinem einen Ende das Kreuzgelenk und ist mit dem anderen Ende an dem Hinterradrahmen im Bereich des Pedallagers befestigbar. Bevorzugt trägt der Arm an dem dem Lenkerlager abgewandten Ende eine Rahmenkupplung, die mit dem Hinterradrahmen starr kuppelbar ist. Besonders bevorzugt ist die Rahmenkupplung ein Klappscharnier.

Das Kreuzgelenk verbindet den Fahrradrahmen mit dem Rollstuhl lösbar über eine Kupplungsvorrichtung. Die Kupplungsvorrichtung ist an dem Lenkerlager des Fahrradrahmens schwenkbar gelagert. Sie besteht aus mindestens einem zur Längsachse des Fahrradrahmens quer verlaufenden Querträger. Bevorzugt trägt das Lenkerlager im Abstand übereinander angeordnet zwei Querträger. Der oder die Querträger werden an dem Rollstuhlrahmen jeweils über zwei Kupplungselemente befestigt. Dabei werden die Kupplungselemente bevorzugt mit den vertikalen Streben des Rollstuhlrahmens verbunden. Als bevorzugte Kupplungselemente dienen verriegelbare Gabeln, Klemmen oder Schellen.

Wenn die Kupplungsvorrichtung aus zwei an dem Lenkerlager angelenkten Querträgern besteht, ist es bevorzugt, daß einer der beiden Querträger mit zwei Kupplungselementen lösbar an den Rollstuhlrahmen kuppelbar ist, während der zweite Querlenker so mit zwei Kupplungselementen an den Rollstuhlrahmen kuppelbar ist, daß er darüberhinaus vertikal verschiebbar ist. Der untere Querlenker liegt dann auf einem Widerlager, das sich an den Vertikalstreben des Rollstuhlrahmens befindet, auf. Besonders bevorzugt wird als Widerlager ein an den handelsüblichen Rollstühlen bereits vorgesehener, herausklappbarer Holm verwendet, der beim Schieben des Rollstuhls als Fußraste dient und sich im unteren Bereich der Vertikalstreben befindet.

In einer bevorzugten Ausführungsform sind die Kupplungselemente an dem Querträger in Querrichtung verschiebbar. Dies hat den Vorteil, daß der Fahrradrahmen an jeden Rollstuhl unabhängig von dem Abstand der beiden vertikalen Streben des Rollstuhlrahmens kuppelbar ist.

Die Figuren 1 bis 4 zeigen eine bevorzugte Ausführungsform der Erfindung.

Figur 1 zeigt die Draufsicht auf ein erfindungsgemäßes Behindertenfahrzeug

Figur 2 zeigt einen Schnitt entlang der Linie 2-2 in Figur 1

Figur 3 zeigt eine bevorzugte Ausführungsform des Kreuzgelenks

Figur 4 zeigt eine weitere bevorzugte Ausführungsform des Kreuzgelenks

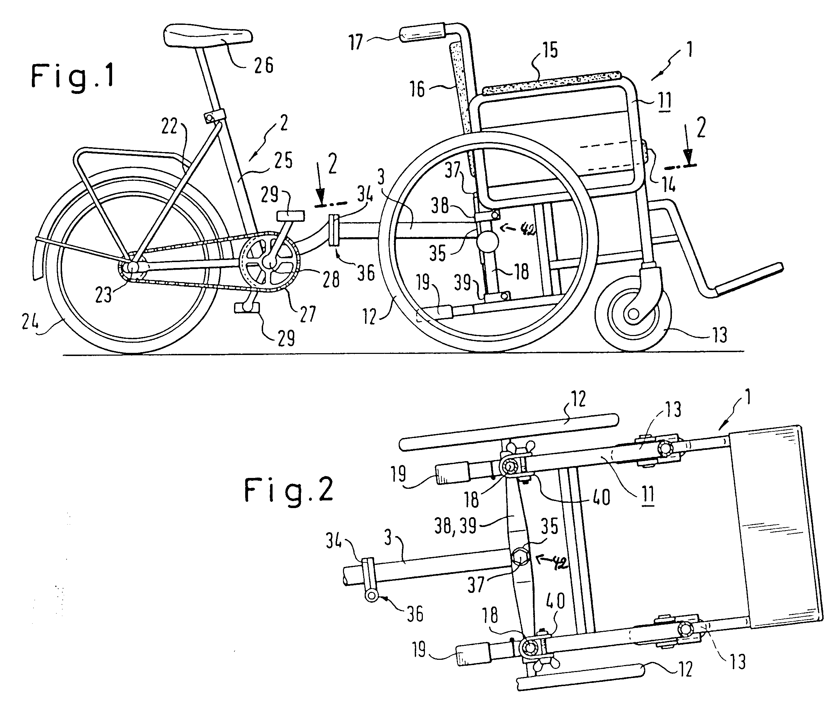

Figur 1 zeigt einen in Achsrichtung der Räder zusammenklappbaren Rollstuhl 1 mit Sitz 14 und Lehne 16, an dessen Rahmen 11 zwei gleichachsige Hinterräder 12 und zwei Vorderräder 13 gelagert sind. Der Rollstuhlrahmen 11 hat zwei Armlehnen 15 und zwei vertikale Streben 18. Im unteren Bereich der Vertikalstreben befinden sich herausklappbare Fußroste 19. Am oberen Ende des Sitzes 14 befinden sich zwei Griffe 17. Ein Fahrradrahmen 2 bestehend aus einer Hinterradgabel 22 mit einer Nabe 23, mit einem über ein Pedallager 28 mit Pedalen 29 und einen Kettenantrieb 27 antreibbaren Antriebsrad 24, einem Sattel 26, der auf einem Sattelstützrohr 25 sitzt, ist hinter dem Rollstuhl 1 angeordnet. Das im wesentlichen vertikal gelagerte Lenkerlager 35 mit einem Kugellager 37 ist im Bereich des Pedallagers 28 mit dem Fahrradrahmen 2 über eine als Klappscharnier ausgebildete Rahmenkupplung 36 und einen Arm 3 starr verbunden. Das Lenkerlager 35 ist mit einem Gelenk 42 verbunden. Weiterhin sind an dem Lenkerlager 35 zwei Querlenker 38,39 angelenkt, die sich im Abstand übereinander befinden. Die Querlenker 38,39 sind mit den Vertikalstreben 18 des Rollstuhlrahmens 11 über Kupplungselemente 40 verbunden. Der obere Querlenker 38 ist lösbar mit zwei Klemmen 40 am Rollstuhlrahmen 11 fixiert, während der untere Querlenker 39 so mit dem Rollstuhlrahmen 11 verbunden ist, daß er vertikal verschiebbar ist. Der untere Querlenker 39 liegt auf dem Fußrost 19 des Rollstuhlrahmens 11 auf.

Figur 2 zeigt einen Schnitt entlang der Linie 2-2. An den Vertikalstreben 18 des Rollstuhlrahmens 11 sind unterhalb der Armlehnen 15 und des Sitzes 14 die Querlenker 38,39 über Klemmen 40 befestigt. Der obere Querlenker 38 ist lösbar fixiert, während der untere Querlenker 39, der auf dem Fußrost 19 aufliegt, vertikal verschiebbar ist. Die Querträger 38,39 sind an dem im wesentlichen vertikalen Lenkerlager 35 angelenkt. An der dem Lenkerlager abgewandten Seite des Armes 3 befindet sich ein als Klappscharnier ausgebildetes Gelenk 36, das mit dem Fahrradrahmen 2 im Bereich des Pedallagers 28 lösbar verbunden ist.

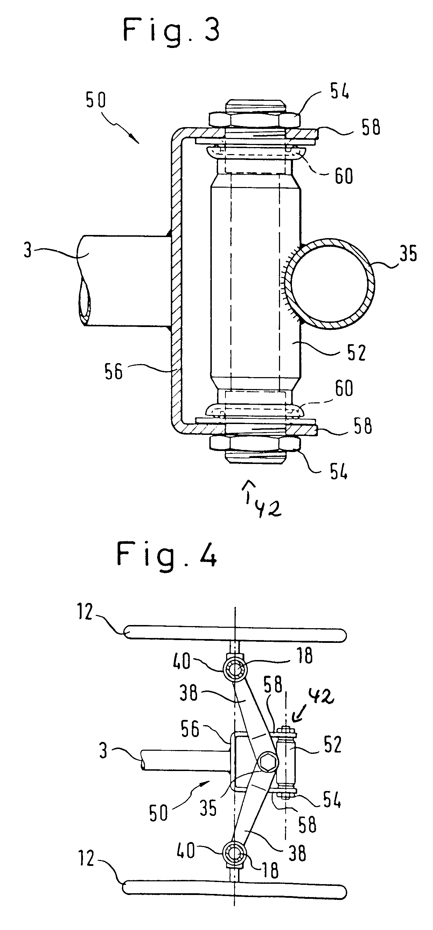

Figur 3 zeigt einen Arm 3, der an dem dem Lenkerlager 35 zugewandten Ende eine Haltevorrichtung 50 trägt. Die Haltevorrichtung 50 besteht aus einem Querholm 56, der quer zur Längsrichtung des Arms 3 angeordnet ist. Von diesem Querholm 56 erstrecken sich zwei Holme 58, die parallel zur Längsrichtung des Arms 3 verlaufen. Quer zur Längsrichtung des Arms befindet sich zwischen den Holmen 58 ein Zwischenstück 52, das an den Holmen 58 durch Schrauben und Muttern 54 befestigt ist. Im Bereich der beiden Enden des Zwischenstücks 52 befinden sich beidseitig Kugellager 60. Das Zwischenstück ist mit dem Lenkerlager 35 fest verbunden.

Figur 4 zeigt eine Haltevorrichtung 50, die an einem Arm 3 befestigt ist und an dem dem Arm abgewandten Ende das Lenkerlager 35 trägt. Die Haltevorrichtung 50 besteht aus einem Querholm 56, der quer zur Längsrichtung des Arms 3 angeordnet ist. Von diesem Querholm 56 erstrecken sich zwei Holme 58, die parallel zur Längsrichtung des Arms 3 verlaufen. Quer zur Längsrichtung des Arms 3 befindet sich zwischen den Holmen 58 ein drehbar gelagertes Zwischenstück 52, das mit dem Lenkerlager 35 fest verbunden ist. Von dem Lenkerlager 35 gehen zwei Querträger 38 aus, die sich schräg nach hinten in Richtung auf den Arm 3 erstrecken. An den Querträgern 38 befinden sich Kupplungsvorrichtungen 40, die an den Vertikalstreben 18 eines Rollstuhls 1 befestigt sind. Dabei befindet sich das Zwischenstück 52 und das Lenkerlager 35 in Fahrtrichtung vor der Achse der Hinterräder 12 des Rollstuhls 1.

## Patentansprüche

1. Behindertenfahrzeug umfassend einen Rollstuhl (1) mit Sitz (14) und Lehne (16), an dessen Rahmen (11) zwei gleichachsige Hinterräder (12) und wenigstens ein Vorderrad (13) gelagert sind, einen hinter dem Rollstuhl (1) angeordneten Fahrradrahmen (2) mit einem über Pedal (29) antreibbaren Antriebsrad (24), einem Sattel (26) und einer an einem Lenkerlager (35) des Fahrradrahmens (2) um eine im wesentlichen vertikale Schwenkachse schwenkbar gelagerten Kupplungsvorrichtung (36) für die lösbare Verbindung des Rollstuhls (1) mit dem Fahrradrahmen (2), wobei die Kupplungsvorrichtung (36) wenigstens einen zur Längsachse des Fahrradrahmens (2) quer verlaufenden Querträger (38, 39) hat, der in der Querrichtung im Abstand voneinander über zwei Kupplungselemente (40) an dem Rollstuhlrahmen (11) befestigbar ist und das Vorderende des Fahrradrahmens (2) an dem Rahmen (11) des Rollstuhls (1) abstützt **dadurch gekennzeichnet,** daß das die Kupplungsvorrichtung tragende Lenkerlager (35) mit dem Fahrradrahmen (2) über ein beidseitig drehbares Gelenk (42) mit im wesentlichen horizontaler Schwenkachse ansonsten jedoch im wesentlichen drehsteif verbunden ist, wobei das Gelenk (42) die Schwenkung des Armes (3) bezüglich des Lenkerlagers (35) in beiden Richtungen ermöglicht.

2. Behindertenfahrzeug nach Anspruch 1, **dadurch gekennzeichnet,** daß das Lenkerlager (35) und das Gelenk (42) in Fahrtrichtung vor der Achse der Hinterräder des Rollstuhls (1) angeordnet sind.

3. Behindertenfahrzeug nach Anspruch 1 oder 2, **dadurch gekennzeichnet,** daß das Gelenk (42) ein beidseitig drehbar gelagertes Zwischenstück (52) ist, das über zwei Kupplungselemente (54) an dem Fahrradrahmen (2) befestigbar ist und mit dem Lenkerlager (35) fest verbunden ist.

4. Behindertenfahrzeug nach Anspruch 3, **dadurch gekennzeichnet,** daß das Lenkerlager (35) und das Gelenk (42) mit dem Fahrradrahmen (2) über einen Arm (3) verbunden sind.

5. Behindertenfahrzeug nach Anspruch 4, **dadurch gekennzeichnet,** daß der Arm (3) an dem dem Lenkerlager (35) zugewandten Ende eine Haltevorrichtung (50) trägt, an der ein beidseitig drehbar gelagertes Zwischenstück (52) über zwei Kupplungselemente (54) befestigbar ist, wobei das Zwischenstück (52) horizontal quer zur Längsrichtung des Arms (3) und quer zu der vertikalen Schwenkachse des Lenkerlagers (35) angeordnet ist und mit dem Lenkerlager (35) fest verbunden ist.

6. Behindertenfahrzeug nach Anspruch 5, **dadurch gekennzeichnet,** daß die Haltevorrichtung (50) aus einem quer zur Längsrichtung des Arms (3) verlaufenden Querholm (56) und zwei sich davon in Längsrichtung des Arms (3) erstreckenden Holmen (58) besteht.

7. Behindertenfahrzeug nach Anspruch 5 oder 6, **dadurch gekennzeichnet,** daß im Bereich der beiden Enden (58) des Zwischenstücks (52) je ein Kugellager angeordnet ist.

8. Behindertenfahrzeug nach einem der vorhergehenden Ansprüche, **dadurch gekennzeichnet,** daß der Rollstuhl (1) in Achsrichtung der Hinterräder (12) zusammenklappbar ist.

9. Behindertenfahrzeug nach einem der vorhergehenden Ansprüche, **dadurch gekennzeichnet,** daß der Fahrradrahmen (2) der Hinterradrahmen eines Einrohr-Klapprades ist, der mit dem Lenkerlager (35) über einen Arm (3) verbunden ist.

10. Behindertenfahrzeug nach Anspruch 9, **dadurch gekennzeichnet,** daß der Arm (3) an dem dem Lenkerlager (35) abgewandten Ende eine Rahmenkupplung (36) hat, die mit dem Hinterradrahmen (2) im Bereich des Pedallagers (28) starr kuppelbar ist.

11. Behindertenfahrzeug nach Anspruch 10, **dadurch gekennzeichnet,** daß die Rahmenkupplung (36) ein Klappscharnier ist.

12. Behindertenfahrzeug nach einem der vorhergehenden Ansprüche **dadurch gekennzeichnet,** daß an dem Lenkerlager (35) im Abstand übereinander zwei Querträger (38,39) angelenkt sind, die mit dem Rollstuhlrahmen (11) über Kupplungselemente (40) verbindbar sind.

13. Behindertenfahrzeug nach Anspruch 12, **dadurch gekennzeichnet,** daß der eine Querträger (38) lösbar mit dem Rollstuhlrahmen (11) kuppelbar ist und der andere Querträger (39) so kuppelbar ist, daß er vertikal verschiebbar ist.

14. Behindertenfahrzeug nach Anspruch 12 oder 13, **dadurch gekennzeichnet,** daß die Kupplungselemente (40) an vertikalen Streben (18) des Rollstuhlrahmens (11) befestigt sind.

15. Behindertenfahrzeug nach Anspruch 14, **dadurch gekennzeichnet,** daß die Kupplungselemente (40) verriegelbare Gabeln, Schellen oder Klemmen sind.

16. Behindertenfahrzeug nach einem der Ansprüche 13 bis 15, **dadurch gekennzeichnet,** daß die zwei Kupplungselemente (40) an dem Querträger (39) in der Querrichtung verschiebbar sind.

**Claims**

1. Vehicle for disabled persons, comprising a wheelchair (1) with seat (14) and backrest (16), at the frame (11) of which are mounted two rear wheels (12) on the same axle and at least one front wheel (13), a bicycle frame (2) arranged behind the wheelchair (1) and with a drive wheel (24) drivable by a pedal (25), a saddle (26) and a coupling device (36), which is mounted at a steering bearing (35) of the bicycle frame (2) to be pivotable about a substantially vertical pivot axis, for the detachable connection of the wheelchair (1) with the bicycle frame (2), wherein the coupling device (36) has at least one crossbar (38, 39) which extends transversely to the longitudinal axis of the bicycle frame (2), is fastenable to the wheelchair frame (11) by way of two coupling elements (40) in the transverse direction at a spacing from one another, and supports the front end of the bicycle frame (2) at the frame (11) of the wheelchair (1), characterised thereby that the steering bearing (35) carrying the coupling device is connected with the bicycle frame (2) by way of a joint (42) rotatable at both sides with substantially horizontal pivot axis but otherwise substantially torsionally stiff, wherein the joint (42) enables the pivotation of the arm (3) with respect to the steering bearing (35) in both directions.

2. Vehicle for disabled persons according to claim 1, characterised thereby that the steering bearing (35) and the joint (42) are arranged in front, in the travel direction, of the axle of the rear wheels of the wheelchair (1).

3. Vehicle for disabled persons according to claim 1 or 2, characterised thereby that the joint (42) is an intermediate member (52), which is rotatably mounted at both sides, is fastenable by way of two coupling elements (54) to the bicycle frame (2) and is fixedly connected with the steering bearing (35).

4. Vehicle for disabled persons according to claim 3, characterised thereby that the steering bearing (35) and the joint (42) are connected with the bicycle frame (2) by way of an arm (3).

5. Vehicle for disabled persons according to claim 4, characterised thereby that the arm (3) carries a holding device (50), at which an intermediate member (52) rotatably mounted at both ends is fastenable by way of two coupling elements (54), at the end facing towards the steering bearing (35), wherein the intermediate member (52) is arranged horizontally transversely to the longitudinal direction of the arm (3) and transversely to the vertical pivot axis of the steering bearing (35) and is fixedly connected with the steering bearing (35).

6. Vehicle for disabled persons according to claim 5, characterised thereby that the holding device (50) consists of a cross beam (56) extending transversely to the longitudinal direction of the arm (3) and two beams (58) extending therefrom in the longitudinal direction of the arm (3).

7. Vehicle for disabled persons according to claim 5 or 6, characterised thereby that a respective ball bearing is arranged in the region of each of the two ends (58) of the intermediate member (52).

8. Vehicle for disabled persons according to one of the preceding claims, characterised thereby that the wheelchair (1) is foldable together in axial direction of the rear wheels (12).

9. Vehicle for disabled persons according to one of the preceding claims, characterised thereby that at the bicycle frame (2) the reat wheel frame is a single tube folding wheel, which is connected with the steering bearing (35) by way of an arm (3).

10. Vehicle for disabled persons according to claim 9, characterised thereby that the arm (3) has, at the end remote from the steering bearing (35), a frame coupling (36), which is rigidly couplable with the rear wheel frame (2) in the region of the pedal bearing (28).

11. Vehicle for disabled persons according to claim 10, characterised thereby that the frame coupling (36) is a folding hinge.

12. Vehicle for disabled persons according to one of the preceding claims, characterised thereby that two crossbars (38, 39), which are connectible with the wheelchair frame (11) by way of coupling elements (40), are articulated to the steering bearing (35) at a spacing one above the other.

13. Vehicle for disabled persons according to claim 12, characterised thereby that the one crossbar (38) is detachably couplable with the wheelchair frame (11) and the other crossbar (30) is so couplable that it is vertically displaceable.

14. Vehicle for disabled persons according to claim 12 or 13, characterised thereby that the coupling elements (40) are fastened to vertical posts (18) of the wheelchair frame (11).

15. Vehicle for disabled persons according to claim 14, characterised thereby that the coupling elements (40) are lockable forks, clips or clamps.

16. Vehicle for disabled persons according to one of claims 13 to 15, characterised thereby that the two coupling elements (40) are displaceable at the crossbar (39) in the transverse direction.

**Revendications**

1. Véhicule pour handicapés comprenant un fauteuil roulant (1) comportant une assise (14) et un dossier (16), sur le cadre (11) duquel sont montées deux roues arrière (12) de même axe et au moins une roue avant (13), un cadre de bicyclette (2) disposé derrière le fauteuil roulant (1) et comportant une roue motrice (24) qui peut être entraînée par des pédales (29), une selle (26) et un dispositif d'accouplement (36), monté de manière pivotante autour d'un axe de pivotement sensiblement vertical sur un support de direction (35) du cadre de bicyclette (2), pour la liaison amovible du fauteuil roulant (1) et du cadre de bicyclette (2), le dispositif d'accouplement (36) comportant au moins une traverse (38, 39) qui s'étend transversalement à l'axe longitudinal du cadre de bicyclette (2), qui peut être fixé sur le cadre (11) du fauteuil roulant en direction transversale par deux éléments d'accouplement (40) à distance l'un de l'autre et qui soutient l'extrémité antérieure du cadre de bicyclette (2) sur le cadre (11) du fauteuil roulant (1), caractérisé en ce que le support de direction (35) qui porte le dispositif d'accouplement est relié au cadre de bicyclette (2) par une articulation (42), capable de tourner des deux côtés, munie d'un axe de pivotement sensiblement horizontal tout en étant autrement sensiblement rigide en rotation, l'articulation (42) permettant le pivotement du bras (3) par rapport au support de direction (35) dans les deux directions.

2. Véhicule pour handicapés selon la revendication 1, caractérisé en ce que le support de direction (35) et l'articulation (42) sont disposés dans le sens de déplacement devant l'axe des roues arrière du fauteuil roulant (1).

3. Véhicule pour handicapés selon la revendication 1 ou 2, caractérisé en ce que l'articulation (42) est une pièce intermédiaire (52) montée de manière à pouvoir tourner des deux côtés, qui peut être fixée sur le cadre de bicyclette (2) par l'intermédiaire de deux éléments d'accouplement (54) et qui est reliée de manière fixe au support de direction (35).

4. Véhicule pour handicapés selon la revendication 3, caractérisé en ce que le support de direction (35) et l'articulation (42) sont reliés au cadre de bicyclette (2) par un bras (3).

5. Véhicule pour handicapés selon la revendication 4, caractérisé en ce que le bras (3) porte à l'extrémité tournée vers le support de direction (35) un dispositif de fixation (50) sur lequel une pièce intermédiaire (52) montée de manière à pouvoir tourner des deux côtés peut être fixée par l'intermédiaire de deux éléments d'accouplement (54), la pièce intermédiaire (52) étant disposée horizontalement transversalement à la direction longitudinale du bras (3) et transversalement à l'axe de pivotement vertical du support de direction (35) et étant reliée de manière fixe au support de direction (35).

6. Véhicule pour handicapés selon la revendication 5, caractérisé en ce que le dispositif de fixation (50) consiste en un longeron transversal (56) qui s'étend transversalement à la direction longitudinale du bras (3) et en deux longerons (58) qui s'étendent depuis le précédent dans la direction longitudinale du bras (3).

7. Véhicule pour handicapés selon la revendication 5 ou 6, caractérisé en ce qu'un roulement à billes est disposé dans le domaine des deux extrémités (58) de la pièce intermédiaire (52).

8. Véhicule pour handicapés selon l'une des revendications précédentes, caractérisé en ce que le fauteuil roulant (1) est pliable dans la direction axiale des roues arrière (12).

9. Véhicule pour handicapés selon l'une des revendications précédentes, caractérisé en ce que le cadre de bicyclette (2) est le cadre de roue arrière d'une bicyclette pliante à un tube qui est relié au support de direction (35) par un bras (3).

10. Véhicule pour handicapés selon la revendication 9, caractérisé en ce que le bras (3) comporte à l'extrémité opposée au support de direction (35) un accouplement de cadre (36) qui peut être accouplé de manière rigide au cadre de roue arrière (2) dans le domaine du pédalier (28).

11. Véhicule pour handicapés selon la revendication 10, caractérisé en ce que l'accouplement de cadre (36) est une charnière rabattable.

12. Véhicule pour handicapés selon l'une des revendications précédentes, caractérisé en ce que deux traverses (38, 39) qui peuvent être réliées au cadre (11) du fauteuil roulant par des éléments d'accouplement (40) sont articulées au support de direction (35) en étant écartées l'une de l'autre dans le sens vertical.

13. Véhicule pour handicapés selon la revendication 12, caractérisé en ce qu'une traverse (38) peut être accouplée de manière amovible au cadre (11) du fauteuil roulant et en ce que l'autre traverse (39) peut être accouplée de manière à être déplaçable verticalement.

**14.** Véhicule pour handicapés selon la revendication 12 ou 13, caractérisé en ce que les éléments d'accouplement (40) sont fixés sur des supports verticaux (18) du cadre (11) du fauteuil roulant.

**15.** Véhicule pour handicapés selon la revendication 14, caractérisé en ce que les éléments d'accouplement (40) sont des fourches, des colliers ou des mâchoires verrouillables.

**16.** Véhicule pour handicapés selon l'une des revendications 13 à 15, caractérisé en ce que les deux éléments d'accouplement (40) sont déplaçables dans le sens transversal sur la traverse (39).

Fig.1

Fig.2

# Fig. 3

# Fig. 4